# EUROPÄISCHE PATENTSCHRIFT

(11) **EP 2 090 806 B1**
(45) Veröffentlichungstag und Bekanntmachung des Hinweises auf die Patenterteilung: **01.06.2011**
(21) Anmeldenummer: 08105974.3
(22) Anmeldetag: 12.12.2008
(51) Int. Cl.: F16H 1/16, F16H 55/22

(54) **Getriebe-Antriebseinheit mit einer Lageranordnung**
Transmission-drive unit with a bearing assembly
Unité d'entrainement de transmission avec un ensemble de roulement

(30) Priorität: 15.02.2008 DE 102008009474
(43) Veröffentlichungstag der Anmeldung: 19.08.2009
(73) Patentinhaber: ROBERT BOSCH GMBH, 70442 Stuttgart (DE)
(72) Erfinder: Oberle, Hans-Jürgen, 76437 Rastatt (DE); Riedinger, Markus, 77839 Lichtenau-Ulm (DE); Angerer, Christof, 76228 Karlsruhe (DE); Lorch, Philipp, 76137 Karlsruhe (DE); Schmidt, Willi, 76297 Stutensee-Buechig (DE); Peter, Gilles, 67360 Morsbronn Les Bains (FR); Reichmann, Siegfried, 77866 Rheinau Freistett (DE)

(56) Entgegenhaltungen:
- DE-A1- 10 027 920
- DE-A1-102005 046 356
- DE-B3-102005 023 930

## Beschreibung

### Stand der Technik

Die Erfindung geht aus von einer Getriebe-Antriebseinheit mit einer Lageranordnung nach der Gattung des unabhängigen Anspruchs 1.

Aus der DE 10 2005 046 356 A1 ist ein als Drehspindelantrieb ausgebildeter Gewindespindel-Verstellantrieb zum Verstellen eines beweglichen Teils in einem Kraftfahrzeug bekannt. Der bekannte Verstellantrieb umfasst ein Radiallager zum Abstützen von auf ein als Schneckenrad ausgebildetes Antriebszahnrad wirkenden Radialkräften an einem Trägerrohr sowie ein Axiallager zum Abstützen von Axialkräften an einer Anlaufscheibe, die in einem Lagerschild aufgenommen ist, welches sich in axialer Richtung an einem am Trägerrohr festgelegten Aufnahmemodul abstützt. Sowohl das topfförmigen Lagerschild als auch die Anlaufscheibe sind aus Metall ausgebildet.

Ein kombiniertes Axial-/Radiallager weist ein einteiliges Lagerelement auf, mit dem sowohl Axialkräfte als auch Radialkräfte an einem Mantelrohr abgestützt werden. Das Lagerelement stützt sich in radialer Richtung am Innenumfang des Mantelrohres und in axialer Richtung an radial nach innen gerichteten Verstemmungen des Mantelrohres ab. Nachteilig bei dieser Konstruktion ist, dass aufgrund der Überbestimmtheit der Lagerung der Gewindespindel an der Gewindemutter und beidseitig des Schneckenrads eine störende Geräuschentwicklung auftritt, sowie die Toleranzen bei der Herstellung schwierig einzuhalten sind.

Mit der gattungsgemäßen DE 102005 023930 B3 ist eine Spindellagerung bekannt geworden, bei der in einem Träger eine Lageraufnahme mit Umfangsrippen angeordnet ist, die mit den Umfangsrillen der Spindel in Eingriff sind. Das antreibende Schneckenrad ist dabei axial benachbart zum Träger angeordnet. Die Lageraufnahme ist mittels einer axialen Ausnehmung geschlitzt ausgeführt, wobei ein Keil des Trägers in den Schlitz einführbar ist.

### Offenbarung der Erfindung

Die erfindungsgemäße Vorrichtung mit den Merkmalen des unabhängigen Anspruchs 1 hat demgegenüber den Vorteil, dass durch die Ausbildung eines Schlitzes im Radiallagerelement dieses radial flexibel ist, sodass die Überbestimmtheit der Spindellagerung ausgeglichen werden kann. Der mindestens eine Schlitz erstreckt sich in Axialrichtung entlang der Spindelachse und trennt den Radiallagerring in ein oder mehrere bewegliche Teile. Dabei weist das radial lagernde Ringelement zwei Bereiche auf, wobei ein Basisring das Ringelement gegenüber dem Mantelrohr radial abstützt und ein zweiter Schlitzbereich einzelne radial bewegliche Laschen aufweist, die durch den Basisring zusammengehalten werden.

Durch die in den abhängigen Ansprüchen aufgeführten Maßnahmen sind vorteilhafte Weiterbildungen und Verbesserungen der im unabhängigen Anspruch angegebenen Vorrichtungen möglich. In vorteilhafter Weise weist der Schlitzbereich einen geringeren Durchmesser auf, als der Basisring, damit sich die elastischen Laschen fest an die Lagerfläche des Antriebsrads radial anpressen.

Hierzu ist es besonders günstig, zumindest den Schlitzbereich konisch auszubilden, so dass die elastischen Laschen beim Aufschieben auf die Lagerfläche des Antriebsrads leicht aufgespreizt werden, wodurch eine Anpresskraft erzeugt wird.

Zur Verstärkung der Anpresskraft des Schlitzbereiches weist dieser eine Ringnut auf, in die ein Spannelement eingelegt wird, der den Schlitzbereich gegen die Lagerfläche des Antriebsrads presst. Dadurch wird eine zuverlässige - quasi schwimmende - radiale Lagerung gewährleistet, die bei Bedarf eine radiale Verschiebung der Welle in gewissen Grenzen ausgleichen kann.

Um eine ausreichende radiale Abstützung des Ringelements an der Innenfläche des Mantelrohrs zu erzielen, ragt die zylindrische Lagerfläche des Abtriebsrads zumindest teilweise in den Bereich des Basisrings hinein. Besonders günstig ist es, wenn der Basisring etwa 1 bis 3 mm axial mit dem Abtriebsrad überlappt.

Damit sich die Lagerfläche des Abtriebsrads fest am Schlitzbereich radial abstützen kann, ist der Schlitzbereich elastisch verformbar. Dadurch können die einzelnen freien Laschen des Schlitzbereichs durch das Spannelement radial gegen die Lagerfläche des Antriebsrads gepresst werden.

Hierzu ist das Ringelement aus einem Kunststoff hergestellt, der einerseits eine genügende Elastizität aufweist und andererseits in Kombination mit dem Antriebsrad eine geeignete Reib-Paarung bildet. Besonders günstig ist die Herstellung des Ringelements als Spritzgussteil, bei dem der Schlitzbereich und der Basisring als ein einteiliges Teil hergestellt werden.

Zur Ausbildung der radial federnden Ringsegmente des Schlitzbereichs beginnen die Schlitze an einem axialen Ende des Schlitzbereichs und führen axial bis zum Basisring.

Das Spannelement ist vorzugsweise als Ringfeder ausgebildet, die eine radial nach innen gerichtete Anpresskraft ausübt. Dabei ist das Spannelement bevorzugt vollständig in die Ringnut einlegbar, sodass das Spannelement radial nicht über den Außendurchmesser des Schlitzbereichs ragt.

Das Radiallagerelement zur radialen Lagerung und des Antriebsrads ist vorzugsweise mit dem axialen Lagerelement verbunden, das als Anlaufscheibe ausgebildet ist. Beispielsweise ist das radiale Ringelement mit dem Axiallagerelement mittels einer plastischen Materialverformung verbunden. So ragen beispielsweise axiale Fortsätze des Kunststoffringes durch entsprechende Durchbrüche in der axialen Anlaufscheibe, die dann beispielsweise unter Einwirkung von Hitze als Nietköpfe umgeformt werden können. Zur einfacheren axialen Positionierung des Axiallagerelements weist dieses einen geringfügigen kleineren Durchmesser auf, als der Innendurchmesser des Mantelrohrs und wird beispielsweise durch radiale Ausformungen des Mantelrohrs, die einen axialen Anschlag für die Axiallagerscheibe bilden, positioniert. Das radial lagernde Ringelement hingegen weist einen größeren Außendurchmesser auf als das Axiallagerelement, um das Antriebsrad radial ohne Spiel gegenüber dem Mantelrohr abzustützen.

Bevorzugt wird die Erfindung für einen Spindelantrieb eingesetzt, bei dem die Welle als Gewindespindel ausgebildet ist. Dabei kann die Spindel als Tauchspindel drehfest gegenüber einem drehbar auf diesem gelagerten Antriebsrad gelagert werden, oder als drehbare Drehspindel, auf der das Antriebsrad drehbar befestigt ist.

Das Antriebsrad ist vorzugsweise als Schneckenrad ausgebildet, das sich axial erstreckende Lagerflächen aufweist und beispielsweise auf die Gewindespindel aufgespritzt ist.

Von besonderem Vorteil ist eine Ausführungsform, bei der das Axiallagerelement und der Radiallagerring axial aneinander anliegend angeordnet sind. Dabei ist eine Ausführungsform realisierbar, bei der die Axialkräfte von der Gewindespindel und/oder dem Antriebszahnrad nicht unmittelbar an dem Axiallagerelement abgestützt werden, sondern nur mittelbar. Bei einer derartigen Ausführungsform dient der Radiallagerring als Axialkraftübertragungselement, das sich in axialer Richtung an dem Axiallagerelement abstützt, welches wiederum an der mindestens einen Verstemmung des Mantelrohres unmittelbar anliegt. Im Hinblick auf eine vereinfachte Montage der Lageranordnung ist eine Ausführungsform bevorzugt, bei der das Axiallagerelement und der Radiallagerring als Verbundteil ausgebildet sind, wobei das Axiallagerelement beispielsweise in den Radiallagerring eingespritzt bzw. von diesem abschnittsweise umspritzt ist. Alternativ ist es denkbar, das Axiallagerelement bereits vorzumontieren, d.h. als Verbundbauteil mit dem Mantelrohr auszubilden. Ebenso ist es realisierbar, das Axiallagerelement und den Radiallagerring nacheinander zu montieren. Zum Herstellen des Axiallagerelementes bietet es sich an, dieses als Stanzteil aus Metall auszubilden. Bevorzugt handelt es sich bei dem Radiallagerring um ein Spritzgussteil aus einem thermoplastischen Kunststoff. Von besonderem Vorteil ist eine Ausführungsform des Gewindespindel-Verstellantriebes als Drehspindelantrieb. Bei dieser Ausführungsform ist das - insbesondere als Schneckenrad ausgebildete - Antriebszahnrad entweder drehfest mit der Gewindespindel verbunden oder verbindbar oder einstückig mit der Gewindespindel ausgebildet, so dass das Antriebszahnrad ortsfest relativ zu der Gewindespindel angeordnet ist. Das direkt oder indirekt über ein Getriebe von einem, insbesondere elektrischen, Antriebsmotor angetriebene Antriebsrad treibt bei einer derartigen Ausbildung die Gewindespindel rotierend an, wobei auf der Gewindespindel, vorzugsweise mit Abstand zu dem Antriebszahnrad, eine Gewindemutter sitzt, die mit einem zu verstellenden Bauteil direkt oder indirekt, beispielsweise über ein Hebelgestänge, verbunden ist. Durch Verdrehen der Gewindespindel wird die Spindelmutter mit dem zu verstellenden Bauteil in axialer Richtung relativ zu der Gewindespindel verstellt. Bei einem als Drehspindelantrieb ausgebildeten Verstellantrieb ist eine Ausführungsform bevorzugt, bei der sich die Gewindespindel und/oder das Antriebszahnrad über eine, vorzugsweise auf der Längsmittelachse der Gewindespindel angeordnete, Kugel an dem Axiallagerelement in axialer Richtung abstützen/abstützt. Um diese im Wesentlichen punktförmige Flächenlast aufnehmen zu können, ist das Axiallagerelement vorzugsweise aus einem gehärteten Metall ausgebildet. Besonders bevorzugt ist an dem Antriebszahnrad oder einem drehfest mit diesem verbundenen Bauteil eine Lageraufnahme für die Kugel vorgesehen.

Gemäß einer alternativen Ausführungsform ist der Gewindespindel-Verstellantrieb als Tauchspindelantrieb ausgeführt, also als ein Verstellantrieb, bei dem die Gewindespindel das Antriebsrad, in axialer Richtung durchsetzt. Die Gewindespindel ist bevorzugt an einem Ende drehfest gelagert, wobei sich durch Verdrehen des Antriebszahnrades dieses sich in axialer Richtung relativ zum Antriebszahnrad bewegt. Mit der Gewindespindel bewegt sich dabei ein zu verstellendes Bauteil, welches mit der Gewindespindel gekoppelt ist. Der Antriebsmotor mit Mantelrohr sowie das Schneckenrad sind im System relativ zur Drehachse der Gewindespindel drehfest fixiert, wobei die Befestigungsbohrung im Mantelrohr ein Kippen des Antriebsmotors mit der Gewindespindel um eine Befestigungsbohrungsachse, d. h. einen Winkelausgleich, zulässt. Bei einem als Tauchspindelantrieb ausgebildeten Gewindespindel-Verstellantrieb ist das Axiallagerelement bevorzugt ringförmig ausgebildet und wird in axialer Richtung von der Gewindespindel durchsetzt.

### Kurze Beschreibung der Zeichnungen

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
Fig. 1: eine als Drehspindelantrieb ausgebildete Getriebe-Antriebseinheit
Fig. 2: eine axiale Ansicht eines Radiallagerelements in unverbautem Zustand.

### Ausführungsformen der Erfindung

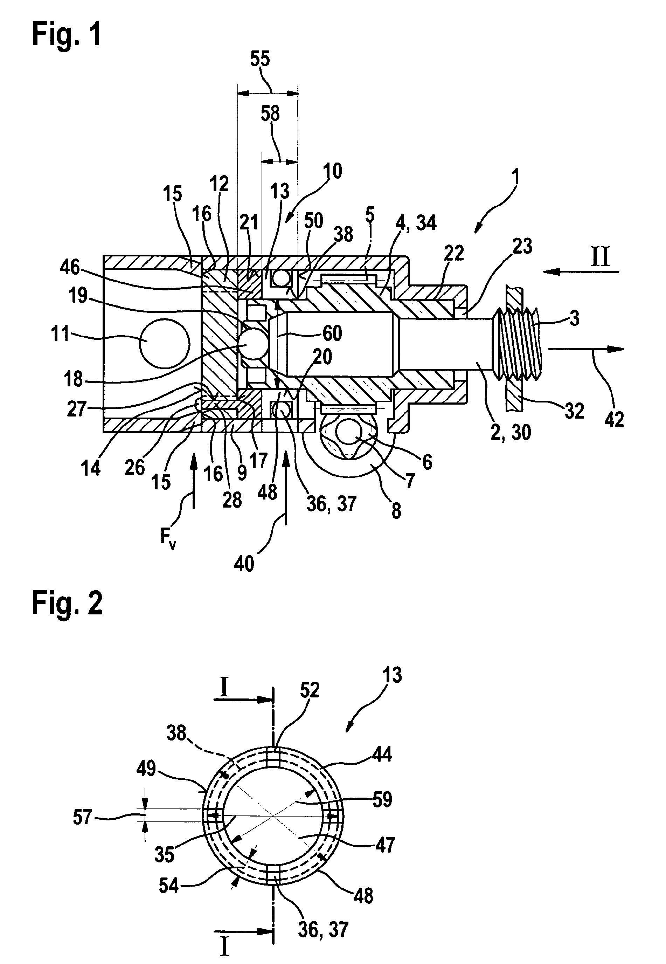

In Fig. 1 ist ein als Drehspindelantrieb ausgebildeter Getriebe-Antriebseinheit 1, hier ein Kraftfahrzeugsitz-Verstellantrieb, gezeigt. Die Antriebseinheit 1 umfasst eine als Gewindespindel 2 ausgebildete Welle 30 mit einem Außengewinde 3, mit dem eine nicht gezeigte, mit einem zu verstellenden Bauteil verbundene, Spindelmutter 32 kämmt. Durch Rotieren der Gewindespindel 2 wird die Spindelmutter 32 mit dem zu verstellenden Fahrzeugteil axial relativ zu der Gewindespindel 2 verstellt. Drehfest mit der Gewindespindel 2 ist ein als Schneckenrad 34 ausgebildetes Antriebsrad 4 verbunden, dessen Schneckenverzahnung 5 mit einer Gewindeschnecke 6 kämmt, die auf einer Motorwelle 7 eines elektrischen Antriebsmotors 8 sitzt. Die Motorwelle 7 verläuft dabei quer zur Längserstreckung der Welle 30. Während des Betriebs des Verstellantriebs 1 wirken auf das Antriebsrad 4 Kräfte sowohl in radialer Richtung 40 als auch in axialer Richtung 42. Zum Abstützen der auf die Gewindespindel 2 und/oder das Antriebszahnrad 4 wirkenden Axial- und Radialkräfte an einem Mantelrohr 9 ist eine Lageranordnung 10 vorgesehen. Das Mantelrohr 9 weist eine Durchgangsöffnung 11 auf, die das Mantelrohr 9 mit Axialabstand zur Gewindespindel 2 in Querrichtung vollständig durchsetzt. Die Durchgangsöffnung 11 dient zur Fixierung des Mantelrohres 9 in einem Gehäuse und/oder an der Fahrzeugkarosserie (nicht gezeigt).

Die Lageranordnung 10 umfasst ein Axiallagerelement 12 sowie einen in axialer Richtung 42 an diesem anliegenden Radiallagerring 13. Das Axiallagerelement 12 ist als Verbundbauteil mit dem Radiallagerring 13 ausgebildet. Dazu weist des Radiallagerelement 13 axiale Fortsätze 28 auf, die durch Aussparungen 27 des Axiallagerelements 12 hindurch greifen. Die freien Enden der axialen Fortsätze 28 sind beispielsweise als Nietköpfe 26 umgeformt. Bei Bedarf können diese Bauteile auch als ein einteiliges Bauteil oder als separat montierbare Bauteile hergestellt werden. Das Axiallagerelement 12 ist als kreisförmige Scheibe aus einem gehärteten Stahl ausgebildet und stützt sich in axialer Richtung in der Zeichnungsebene nach links mit einer von der Gewindespindel 2 abgewandten Stirnseite 14 an mehreren, nach radial innen weisenden, Verstemmungen 15 - bzw. deren Stirnseiten 16 - des Mantelrohres 9 ab. Die Verstemmungen 15 sind als nach radial innen gerichtete Mantelflächenabschnitte des Mantelrohres 9 ausgebildet, die durch Aufbringen einer von radial außen nach radial innen auf das Mantelrohr 9 gerichteten Verstemmkraft F_{V} in das Mantelrohr 9 eingebracht wurden. Bei dem Ausführungsbeispiel gemäß Fig. 1 ist das scheibenförmige Axiallagerelement 12 als Stanzteil ausgebildet, welches eine zur Stirnseite 14 parallele, der Gewindespindel 2 zugewandte, Stirnseite 17 aufweist. An der Stirnseite 17 des Axiallagerelementes 12 stützen sich zentrisch in axialer Richtung 42 die Gewindespindel 2 sowie das Antriebszahnrad 4 mittels einer Kugel 18 ab. Die aus Stahl bestehende Kugel 18 ist in einer Lageraufnahme 19 aufgenommen, die stirnseitig an dem als Spritzgussteil ausgebildeten Antriebsrad 4 angeordnet ist. Alternativ kann die Kugel 18 auch in einer Bohrung der Welle 32 aufgenommen werden. Mit Radialabstand zu der Kugel 18 stützt sich das Antriebsrad 4 mit einer Lagerfläche 20 an dem Radiallagerring 13 ab. Dieser liegt wiederum am Innenumfang 21 des Mantelrohres 9 an, und stützt die auf das Antriebsrad 4 wirkenden Radialkräfte am Mantelrohr 9 ab. In dem gezeigten Ausführungsbeispiel ist der Radiallagerring 13 als Kunststoff-Spritzgussteil ausgebildet. Auf der dem Radiallagerring 13 gegenüberliegenden Seite der Schneckenverzahnung 5 des Antriebszahnrades 4 stützt sich das Antriebszahnrad 4 in radialer Richtung mit einem weiteren Umfangsabschnitt 22 unmittelbar an einem abgestuften Innenumfang 21 des Mantelrohres 9 ab. Im Mantelrohr 9 ist in der in der Zeichnungsebene rechten Seite eine Durchgangsöffnung 23 eingebracht, durch die die Gewindespindel 2 mit einem gewindefreien Abschnitt in das Mantelrohr 9 hineinragt.

Das Radiallagerelement 13 weist einen geschlossenen Basisring 46 auf, dem sich axial ein Schlitzbereich 48 anschließt. Im Schlitzbereich 48 sind beispielsweise zwei gegenüberliegende Schlitze 52 ausgeformt, die sich über die gesamte Wandstärke 54 des Radiallagerelements 13 erstrecken. Die Schlitze 52 erstrecken sich dabei von einem freien Ende 50 des Lagerringelements 13, das dem Antriebsrad 4 zugewandt ist, in axialer Richtung bis zum Basisring 46. Im Schlitzbereich 48 ist an dessen äußerem Umfang 49 eine umlaufende Ringnut 38 ausgebildet, die ein Spannelement 36 aufnimmt. Das Spannelement 36 ist beispielsweise als Ringfeder 37 ausgebildet, die eine radial nach innen gerichtete Kraft auf den Schlitzbereich 48 ausübt. Dadurch werden die in Radialrichtung 40 elastischen Ringsegmente 56 gegen die Lagerfläche 20 des Antriebsrads 40 gepresst. Dadurch kann ein leichtes Verkanten oder Verbiegen der Welle 30 in Radialrichtung elastisch ausgeglichen werden. Der Basisring 46 liegt einerseits fest radial an der Innenfläche 21 des Mantelrohrs 9 an (beispielsweise mittels Einpressen der strukturierten Umfangsfläche des Basisrings 46) und andererseits mit seiner Innenfläche ebenfalls unmittelbar an der Lagerfläche 20 an. Durch diese axiale Überlappung des Basisrings 46 mit der Lagerfläche 20 des Antriebsrads 4 wird verhindert, dass ein Radialspiel der Lagervorrichtung 10 entsteht.

In Fig. 2 ist eine weitere Ausführung eines Radiallagerelements 13 dargestellt, bevor dieses in die Getriebe-Antriebseinheit 1 eingebaut ist. Im Schlitzbereich 48 sind beispielsweise vier Schlitze 52 gleichmäßig über den Umfang des Radiallagerelements 13 angeordnet. Durch die Wahl der Anzahl und die Breite 57 und die Länge 58 in Axialrichtung 42 kann die radiale Elastizität in Verbindung mit dem Spannelement 36 vorgegeben werden. Dadurch ist die Radiallagerung quasi schwimmend ausgebildet, wobei die radiale Vorspannung das System immer unter einer Grundlast hält, sodass sich keine lastfreien und somit geräuschkritischen Zustände einstellen können. Die überlagerte Grundlast bewirkt außerdem eine bessere Selbsthemmung, so dass ein selbsttätiges Verstellen des Systems verhindert wird. Der Schlitzbereich 48 weist einen Innendurchmesser 59 auf, der in unverbautem Zustand geringer ist, als der Außendurchmesser 60 der Lagerfläche 20. In den Schlitzen 52 ist das in die Ringnut 38 eingelegte Spannelement 36 sichtbar, dessen Außendurchmesser 35 im eingebauten Zustand geringer ist, als der Außendurchmessers 47 des Schlitzbereichs. Die Innenfläche des Schlitzbereichs 48 ist in Fig. 2 über die Axialrichtung 42 konisch ausgebildet, sodass der Innendurchmesser 59 am axialen Ende 50 des Schlitzbereichs 48 im unverbauten Zustand kleiner ist, als der entsprechende Innendurchmesser des Basisringes 46.

In einem nicht dargestellten alternativen Ausführungsbeispiel ist die Getriebe-Antriebseinheit 1 mit einer durchtauchenden Spindel 2 ausgebildet. Hierzu weist das Axiallagerelement 12 einen zentralen Durchbruch auf, wie dieser in Fig. 1 gestrichelt angedeutet ist. Bei dieser Ausführung weist das Antriebsrad 4 ein Innengewinde auf, das mit dem Außengewinde 3 der Gewindespindel 2 kämmt. Dabei ist die Tauchspindel 2 drehfest gelagert und wird in Axialrichtung 42 durch das Antriebsrad 4 hindurchgeschoben. Das Radiallagerelement 13 liegt bei dieser Ausführung axial in einem Bund des Antriebsrads 4 an und leitet die eingeleiteten Axialkräfte an das ringförmig ausgebildete Axiallagerelement 12 weiter. Die Ausführung eines solchen durchtauchenden Spindelantriebs ist mit der Fig. 4 der oben zitierten DE 102005046356 A1 auch Gegenstand der Offenbarung dieser Patentanmeldung.

Es sei angemerkt, das hinsichtlich der in den Figuren und der Beschreibung gezeigten Ausführungsbeispiele vielfältige Kombinationsmöglichkeiten der einzelnen Merkmale untereinander möglich sind. So kann beispielsweise das Radiallagerelement 13 und das Axiallagerelement 12 wahlweise separat oder als gemeinsames Bauteil montiert werden. Ebenso kann die Ausführung des Spannelements 37 der Schlitze 52 und der Basisring 46 den Anforderungen der auf die Welle einwirkenden Momente angepasst werden. Bevorzugt findet die Getriebe-Antriebseinheit 1 Anwendung für die Verstellung von Sitzen bzw. Sitzteilen im Kraftfahrzeug, ist jedoch nicht auf eine solche Anwendung beschränkt.

## Patentansprüche

1. Getriebe-Antriebseinheit (1), insbesondere ein Gewindespindel-Verstellantrieb im Kraftfahrzeug, mit einem motorisch angetriebenen Antriebsrad (4), das auf einer Welle (30) angeordnet ist, die in einem Mantelrohr (9) gelagert ist, und mit einer Lageranordnung (10) zum Abstützen von Axial- und Radialkräften der Welle (30) und/oder dem Antriebsrad (4) an einem Mantelrohr (9),wobei die Lageranordnung (10) zur Aufnahme der Radialkräfte ein Radiallagerelement (13) aufweist, das mindestens einen axialen Schlitz (52) aufweist, der sich über die gesamte Wandstärke (54) des Radiallagerelements (13) erstreckt, **dadurch gekennzeichnet, dass** ein erster axialer Bereich des Radiallagerelements (13) als ein geschlossener Basisring (46) ausgebildet ist, der sich an der Innenfläche (21) des Mantelrohrs (9) abstützt, und ein zweiter axialer Bereich als Schlitzbereich (48) ausgebildet ist, dessen mindestens eine Schlitz (52) eine axiale Länge (58) aufweist, die geringer ist als die axiale Gesamtlänge (55) des Radiallagerelements (13).

2. Getriebe-Antriebseinheit (1) nach Anspruch 1, **dadurch gekennzeichnet, dass** der Schlitzbereich (48) vor dem Einbau des Radiallagerelements (13) einen geringeren Innendurchmesser (59) aufweist, als der Innendurchmesser (59) des Basisrings (46).

3. Getriebe-Antriebseinheit (1) nach einem der Ansprüche 1 oder 2, **dadurch gekennzeichnet, dass** der Schlitzbereich (48) eine konische Innenfläche aufweist.

4. Getriebe-Antriebseinheit (1) nach einem der vorhergehenden Ansprüche, **dadurch gekennzeichnet, dass** der Schlitzbereich (48) an seinem Außenumfang eine (49) umlaufende Nut (38) zur Aufnahme eines ringförmigen Spannelements (36) aufweist.

5. Getriebe-Antriebseinheit (1) nach einem der vorhergehenden Ansprüche, **dadurch gekennzeichnet, dass** das Spannelement (36) den Schlitzbereich (48) des eingebauten Radiallagerelements (13) radial gegen eine zylinderförmige Lagerfläche (20) des Antriebrads (4) presst.

6. Getriebe-Antriebseinheit (1) nach einem der vorhergehenden Ansprüche, **dadurch gekennzeichnet**, **dadurch gekennzeichnet, dass** der Basisring (46) mit der zylinderförmigen Lagerfläche (20) des Antriebrads (4) axial überlappt - vorzugsweise um 1 bis 3 mm.

7. Getriebe-Antriebseinheit (1) nach einem der vorhergehenden Ansprüche, **dadurch gekennzeichnet, dass** zumindest der Schlitzbereich (48) elastisch ausgebildet ist, derart, dass sich dessen Innendurchmesser (59) durch das eingelegte Spannelement (36) verringern lässt.

8. Getriebe-Antriebseinheit (1) nach einem der vorhergehenden Ansprüche, **dadurch gekennzeichnet**, das der Schlitzbereich (48) einstückig mit dem Basisring (46) aus ausgebildet ist, insbesondere aus einem Kunststoff gespritzt ist.

9. Getriebe-Antriebseinheit (1) nach einem der vorhergehenden Ansprüche, **dadurch gekennzeichnet, dass** der Schlitzbereich (48) mehrere Schlitze (52) aufweist, die sich axial bis zu dem dem Basisring (46) abgewandten Ende (50) des Radiallagerelements (13) erstrecken, wodurch zwischen den Schlitzen (52) elastische, radial bewegliche Ringsegmente (44) ausgebildet sind.

10. Getriebe-Antriebseinheit (1) nach einem der vorhergehenden Ansprüche, **dadurch gekennzeichnet, dass** das Spannelement (36) als metallische Ringfeder (37) - insbesondere mit einem oder mehrerer umlaufenden Drähten - ausgebildet ist.

11. Getriebe-Antriebseinheit (1) nach einem der vorhergehenden Ansprüche, **dadurch gekennzeichnet, dass** der Außendurchmesser (35) des eingelegten Spannelements (36) nicht größer ist, als der Außendurchmesser (47) des Schlitzbereichs (48).

12. Getriebe-Antriebseinheit (1) nach einem vorhergehenden Ansprüche, **dadurch gekennzeichnet, dass** die Lageranordnung (10) ein Axiallagerelement (12) aus - insbesondere gehärtetem - Metall aufweist, das mittels Verstemmen mit dem Radiallagerelement (13) verbunden ist.

13. Getriebe-Antriebseinheit (1) nach einem der vorhergehenden Ansprüche,
**dadurch gekennzeichnet, dass** das Axiallagerelement (12) axial durchgehende Aussparungen (27) aufweist, durch die korrespondierende axiale Zapfen (28) des Radiallagerelements (13) durchgreifen, und insbesondere mittels plastischer Verformung einen Formschluss bilden.

14. Getriebe-Antriebseinheit (1) nach einem der Ansprüche **dadurch gekennzeichnet, dass** das Axiallagerelement (12) einen - vorzugsweise kreisförmigen - Außenumfang aufweist dessen Außendurchmesser geringer ist, als der Außendurchmesser (47) des Basisrings (46).

15. Getriebe-Antriebseinheit (1) nach einem der vorhergehenden Ansprüche, **dadurch gekennzeichnet, dass** die Welle (30) als Drehspindel (2) mit drehfest darauf angeordnetem Antriebsrad (4) ausgebildet ist, oder als Tauchspindel (2) mit drehbar darauf angeordnetem Antriebsrad (4) ausgebildet ist.

16. Getriebe-Antriebseinheit (1) nach einem der vorhergehenden Ansprüche, **dadurch gekennzeichnet, dass** das Antriebsrad (4) als Schneckenrad (5) ausgebildet ist, das mit einer Schneckenwelle (6) eines Elektromotors (8) kämmt, wobei das Schneckenrad (34) zwei axiale Fortsätze aufweist, an denen die zylinderförmigen Lagerfläche (20, 22) angeformt sind.

## Claims

1. Gearing-drive unit (1), in particular a threaded spindle adjusting drive in a motor vehicle, having a motor-driven drive wheel (4) arranged on a shaft (30) which is mounted in a casing tube (9), and having a bearing arrangement (10) for supporting axial and radial forces of the shaft (30) and/or the drive wheel (4) on a casing tube (9), the bearing arrangement (10) having a radial bearing element (13) for absorbing radial forces, which radial bearing element has at least one axial slot (52) extending over the entire wall thickness (54) of the radial bearing element (13),
**characterized in that** a first axial region of the radial bearing element (13) is formed as a closed base ring (46) which is supported on the inner surface (21) of the casing tube (9), and a second axial region is designed as a slot region (48) whose at least one slot (52) has an axial length (58) shorter than the axial overall length (55) of the radial bearing element (13).

2. Gearing-drive unit (1) according to Claim 1, **characterized in that**, before the installation of the radial bearing element (13), the slot region (48) has a smaller inner diameter (59) than the inner diameter (59) of the base ring (46).

3. Gearing-drive unit (1) according to either of Claims 1 and 2, **characterized in that** the slot region (48) has a conical inner surface.

4. Gearing-drive unit (1) according to one of the preceding claims, **characterized in that** the slot region (48) has on its outer circumference (49) an encircling groove (38) for receiving an annular clamping element (36).

5. Gearing-drive unit (1) according to one of the preceding claims, **characterized in that** the clamping element (36) presses the slot region (48) of the installed radial bearing element (13) radially against a cylindrical bearing surface (20) of the drive wheel (4).

6. Gearing-drive unit (1) according to one of the preceding claims, **characterized in that** the base ring (46) axially overlaps the cylindrical bearing surface (20) of the drive wheel (4), preferably by 1 to 3 mm.

7. Gearing-drive unit (1) according to one of the preceding claims, **characterized in that** at least the slot region (48) is of elastic design, in such a way that its inner diameter (59) can be reduced by the inserted clamping element (36).

8. Gearing-drive unit (1) according to one of the preceding claims, **characterized in that** the slot region (48) is formed, in particular injection-moulded from a plastic, in one piece with the base ring (46).

9. Gearing-drive unit (1) according to one of the preceding claims, **characterized in that** the slot region (48) has a plurality of slots (52) which extend axially up to that end (50) of the radial bearing element (13) which faces away from the base ring (46), as a result of which elastic, radially movable annular segments (44) are formed between the slots (52).

10. Gearing-drive unit (1) according to one of the preceding claims, **characterized in that** the clamping element (36) is formed as a metallic annular spring (37) - in particular with one or more encircling wires.

11. Gearing-drive unit (1) according to one of the preceding claims, **characterized in that** the outer diameter (35) of the inserted clamping element (36) is no greater than the outer diameter (47) of the slot region (48).

12. Gearing-drive unit (1) according to one of the preceding claims, **characterized in that** the bearing arrangement (10) has an axial bearing element (12) which is composed of - in particular hardened - metal and which is connected to the radial bearing element (13) by caulking.

13. Gearing-drive unit (1) according to one of the preceding claims, **characterized in that** the axial bearing element (12) has axially continuous cutouts (27) through which corresponding axial pegs (28) of the radial bearing element (13) extend and form a positively locking connection in particular by means of plastic deformation.

14. Gearing-drive unit (1) according to one of the claims, **characterized in that** the axial bearing element (12) has a - preferably circular - outer circumference whose outer diameter is smaller than the outer diameter (47) of the base ring (46).

15. Gearing-drive unit (1) according to one of the preceding claims, **characterized in that** the shaft (30) is designed as a rotary spindle (2) with drive wheel (4) arranged thereon for conjoint rotation therewith, or as a plunger spindle (2) with drive wheel (4) arranged rotatably thereon.

16. Gearing-drive unit (1) according to one of the preceding claims, **characterized in that** the drive wheel (4) is designed as a worm gear (5) which meshes with a worm shaft (6) of an electric motor (8), the worm gear (34) having two axial projections on which the cylindrical bearing surfaces (20, 22) are integrally formed.

## Revendications

1. Unité d'entraînement de transmission (1), en particulier entraînement de réglage à broche filetée dans un véhicule automobile, comprenant une roue d'entraînement (4) entraînée par un moteur, qui est disposée sur un arbre (30) qui est monté dans un tube enveloppe (9) et comprenant un agencement de palier (10) pour supporter les forces axiales et radiales de l'arbre (30) et/ou la roue d'entraînement (4) sur un tube enveloppe (9), l'agencement de palier (10) présentant, pour recevoir les forces radiales, un élément de palier radial (13) qui présente au moins une fente axiale (52) qui s'étend sur toute l'épaisseur de paroi (54) de l'élément de palier radial (13), **caractérisée en ce qu'**une première région axiale de l'élément de palier radial (13) est réalisée sous forme de bague de base fermée (46) qui s'appuie sur la surface interne (21) du tube enveloppe (9), et une deuxième région axiale est réalisée sous forme de région de fente (48) dont au moins une fente (52) présente une longueur axiale (58) qui est inférieure à la longueur axiale totale (55) de l'élément de palier radial (13).

2. Unité d'entraînement de transmission (1) selon la revendication 1, **caractérisée en ce que** la région de fente (48) présente avant le montage de l'élément de palier radial (13) un diamètre intérieur (59) plus petit que le diamètre intérieur (59) de la bague de base (46).

3. Unité d'entraînement de transmission (1) selon l'une quelconque des revendications 1 ou 2, **caractérisée en ce que** la région de fente (48) présente une surface interne conique.

4. Unité d'entraînement de transmission (1) selon l'une quelconque des revendications précédentes, **caractérisée en ce que** la région de fente (48) présente sur sa périphérie externe (49) une rainure périphérique (38) pour recevoir un élément de serrage annulaire (36).

5. Unité d'entraînement de transmission (1) selon l'une quelconque des revendications précédentes, **caractérisée en ce que** l'élément de serrage (36) presse la région de fente (48) de l'élément de palier radial monté (13) radialement contre une surface de palier cylindrique (20) de la roue d'entraînement (4).

6. Unité d'entraînement de transmission (1) selon l'une quelconque des revendications précédentes, **caractérisée en ce que** la bague de base (46) chevauche la surface de palier cylindrique (20) de la roue d'entraînement (4) axialement, de préférence sur 1 à 3 mm.

7. Unité d'entraînement de transmission (1) selon l'une quelconque des revendications précédentes, **caractérisée en ce qu'**au moins la région de fente (48) est réalisée sous forme élastique, de telle sorte que son diamètre intérieur (59) puisse être réduit par l'élément de serrage introduit (36).

8. Unité d'entraînement de transmission (1) selon l'une quelconque des revendications précédentes, **caractérisée en ce que** la région de fente (48) est réalisée d'une seule pièce avec la bague de base (46), notamment est fabriquée par injection de plastique.

9. Unité d'entraînement de transmission (1) selon l'une quelconque des revendications précédentes, **caractérisée en ce que** la région de fente (48) présente plusieurs fentes (52) qui s'étendent axialement jusqu'à l'extrémité (50) de l'élément de palier radial (13) opposée à la bague de base (46), de sorte que des segments annulaires élastiques (44) déplaçables radialement, soient réalisés entre les fentes (52).

10. Unité d'entraînement de transmission (1) selon l'une quelconque des revendications précédentes, **caractérisée en ce que** l'élément de serrage (36) est réalisé sous forme de ressort annulaire métallique (37), notamment avec un ou plusieurs fils métalliques périphériques.

11. Unité d'entraînement de transmission (1) selon l'une quelconque des revendications précédentes, **caractérisée en ce que** le diamètre extérieur (35) de l'élément de serrage introduit (36) n'est pas plus grand que le diamètre extérieur (47) de la région de fente (48).

12. Unité d'entraînement de transmission (1) selon l'une quelconque des revendications précédentes, **caractérisée en ce que** l'agencement de palier (10) présente un élément de palier axial (12) en métal, notamment trempé, qui est connecté par matage à l'élément de palier radial (13).

13. Unité d'entraînement de transmission (1) selon l'une quelconque des revendications précédentes, **caractérisée en ce que** l'élément de palier axial (12) présente des évidements (27) traversant axialement l'élément de palier axial (12), à travers lesquels des tourillons axiaux (28) correspondants de l'élément de palier radial (13) viennent en prise et forment notamment, par déformation plastique, un engagement par correspondance géométrique.

14. Unité d'entraînement de transmission (1) selon l'une quelconque des revendications précédentes, **caractérisée en ce que** l'élément de palier axial (12) présente une périphérie externe de préférence circulaire dont le diamètre extérieur est inférieur au diamètre extérieur (47) de la bague de base (46).

15. Unité d'entraînement de transmission (1) selon l'une quelconque des revendications précédentes, **caractérisée en ce que** l'arbre (30) est réalisé sous forme de broche rotative (2) avec une roue d'entraînement (4) disposée de manière solidaire en rotation sur celle-ci, ou est réalisé sous forme de broche plongeante (2) avec la roue d'entraînement (4) disposée de manière rotative sur celle-ci.

16. Unité d'entraînement de transmission (1) selon l'une quelconque des revendications précédentes, **caractérisée en ce que** la roue d'entraînement (4) est réalisée sous forme de roue à denture hélicoïdale (5) qui s'engrène avec un arbre de vis sans fin (6) d'un moteur électrique (8), la roue à denture hélicoïdale (34) présentant deux saillies axiales sur lesquelles sont façonnées les surfaces de palier cylindriques (20, 22).
